# EUROPÄISCHE PATENTSCHRIFT

(11) **EP 3 162 255 B1**
(45) Veröffentlichungstag und Bekanntmachung des Hinweises auf die Patenterteilung: **19.02.2020**
(21) Anmeldenummer: 16190302.6
(22) Anmeldetag: 23.09.2016
(51) Int. Cl.: A47J 31/36, A47J 31/44

(54) **HEISSGETRÄNKEZUBEREITUNGSVORRICHTUNG MIT KUPPLUNGSVORRICHTUNG**
HOT BEVERAGE PREPARATION DEVICE WITH COUPLING DEVICE
DISPOSITIF DE PRÉPARATION DE BOISSONS CHAUDES COMPRENANT UN DISPOSITIF DE COUPLAGE

(30) Priorität: 28.10.2015 DE 102015221094
(43) Veröffentlichungstag der Anmeldung: 03.05.2017
(73) Patentinhaber: BSH Hausgeräte GmbH, 81739 München (DE)
(72) Erfinder: Ursej, Matjaz, 2382 Mislinja (SI); Huber, Michael, 6341 Ebbs (AT); Haslacher, Christian, 5303 Thalgau (AT); Strobl, Robert, 83246 Unterwössen (DE)

(56) Entgegenhaltungen:
- EP-A1- 1 774 883
- WO-A1-02/080746
- DE-A1-102012 220 753

## Beschreibung

Die Erfindung betrifft eine Heißgetränkezubereitungsvorrichtung, insbesondere einen Kaffeevollautomaten, mit welchem insbesondere Heißgetränke oder heiße flüssige Lebensmittel wie beispielsweise Kaffee, Tee, heiße Milch, Kakaogetränke oder auch Suppen zubereitet werden können.

Nachfolgend werden die Begriffe "Heißgetränkezubereitungsvorrichtung", "Kaffeevollautomat" und "KVA" gleichbedeutend benutzt, so dass einer dieser Begriffe stets die anderen beinhaltet und sie daher gegeneinander austauschbar sind.

Bei bekannten Kaffeevollautomaten kann eine Brüheinheit regelmäßig zu deren Reinigung aus einem Gehäuse des Kaffeevollautomaten entnommen werden. In der DE 10 20102 220 753 A1 ist die Brüheinheit mit einem Motor über ein Winkelgetriebe mit zwei Kegelzahnrädern gekoppelt, damit die Entnahmerichtung für die Brüheinheit parallel zu einer Achse des Motors liegt. Die Brüheinheit ist auf Führungsschienen sehr exakt geführt, um eine zuverlässige Koppelung beim Einsetzen der Brüheinheit sicherzustellen.

Eine entnehmbare Brüheinheit ist beispielsweise aus der Druckschrift EP 1 774 883 A1 bekannt.

Ein Antrieb mit Kupplungen, die abhängig vom Zustand einer Steuerung verschiedene Aggregate wahlweise antreiben können, ist beispielsweise aus der Druckschrift WO 02/080746 A1 bekannt.

Aufgabe der vorliegenden Erfindung ist es daher, ein einfaches Entfernen aus einem und Einsetzen einer Brüheinheit in einen Kaffeevollautomaten zu ermöglichen.

Diese Aufgabe wird erfindungsgemäß durch eine Heißgetränkezubereitungsvorrichtung mit den Merkmalen des unabhängigen Patentanspruchs 1 gelöst. Demgemäß ist eine Heißgetränkezubereitungsvorrichtung vorgesehen, die
- ein erstes, mit einer Antriebseinheit gekoppeltes Kupplungselement mit einer Anzahl von ersten Kraftübertragungselementen,
- eine aus der Heißgetränkezubereitungsvorrichtung entnehmbare Brüheinheit, und
- ein zweites, der Brüheinheit zugeordnetes Kupplungselement mit einer der Anzahl von ersten Kraftübertragungselementen entsprechenden Anzahl von zweiten Kraftübertragungselementen aufweist,
wobei in einem Betrieb der Heißgetränkezubereitungsvorrichtung das erste Kupplungselement und das zweite Kupplungselement mit einem Eingriffsspiel zwischen den Kraftübertragungselementen derart ineinander eingreifen, dass die Brüheinheit und damit das ihr zugeordnete Kupplungselement in der Heißgetränkezubereitungsvorrichtung spielbehaftet sitzen.

Die vorliegende Erfindung basiert auf der Erkenntnis, dass es für einen Benutzer einer Heißgetränkezubereitungsvorrichtung ein gewisses Hindernis bei ihrer Benutzung darstellt, wenn er die Brüheinrichtung nach einer Entnahme sehr exakt auf Schienen in der Heißgetränkevorrichtung positionieren oder andere kodierte Koppelelemente bedienen muss.

Bei der vorliegenden Erfindung bilden das erste und das zweite Kupplungselement eine Art lösbare Welle-Nabe-Verbindung. Dabei kann das erste Kupplungselement die Welle und das zweite Kupplungselement die Nabe bilden oder umgekehrt. Das Eingriffsspiel zwischen dem ersten und dem zweiten Kupplungselement bedeutet, dass die Wellenpaarung im Eingriffsbereich spielbehaftet ist. Bei ihrer Koppelung entsteht folglich kein zwingender Formschluss, sondern es verbleibt ein gewisser Bewegungsfreiraum, in dem sich die Kupplungselemente zunächst gegeneinander bewegen können, bevor sie eine Momentenübertragung zulassen. Das Spiel kann sowohl radial vorliegen - und damit einen Achsversatz der Kupplungselemente zulassen - als auch in Umfangsrichtung vorliegen und damit eine Relativverdrehung der Kupplungselemente gegeneinander zulassen, ohne dass sie sich berühren. Bei der vorliegenden Erfindung können die Brüheinheit und damit das ihr zugeordnete Kupplungselement in der Heißgetränkezubereitungsvorrichtung also spielbehaftet, d.h. in gewissem Rahmen in einer Ebene senkrecht zur Kupplungsachse beweglich sitzen. Das erste Kupplungselement dagegen bildet die Abtriebswelle der Antriebseinheit und ist radial gelagert. Bei einer Radiallagerung bzw. einem Radiallager ist lediglich eine Rotation möglich. Eine andere radiale Bewegung des ersten Kupplungselements ist folglich - zumindest über die vorhandenen Toleranzen des Radiallagers hinaus - ausgeschlossen. Das erfindungsgemäße Eingriffsspiel zwischen dem ersten und dem zweiten Kupplungselement erlaubt dennoch das Einsetzen und den anschließenden Betrieb der Brüheinheit.

Ein Benutzer muss folglich beim Einsetzen der Brüheinheit keine Kodierungselemente mehr in eine vorgegebene Position bringen, um die Brüheinheit mit ihrem Antrieb zu koppeln. Vielmehr braucht der Benutzer die Brüheinheit lediglich an der vorgegebenen Stelle zu positionieren. Die mechanische Koppelung der Brüheinheit und ihres Antriebs erfolgt erfindungsgemäß selbsttätig. Denn aufgrund des Spiels zwischen den Kupplungselementen können sie auch dann ineinander eingreifen, wenn ihre Achsen nicht unmittelbar miteinander fluchten. Die erfindungsgemäße Anordnung der Kupplungselemente ermöglicht folglich eine einfachere Handhabung der Brüheinheit.

Weitere, besonders vorteilhafte Ausgestaltungen und Weiterbildungen der Erfindung ergeben sich aus den abhängigen Ansprüchen sowie der nachfolgenden Beschreibung, wobei die Merkmale verschiedener Ausführungsbeispiele zu neuen Ausführungsbeispielen kombiniert werden können. Insbesondere können die unabhängigen Ansprüche einer Anspruchskategorie auch analog zu den abhängigen Ansprüchen einer anderen Anspruchskategorie weitergebildet sein.

In einer vorteilhaften Ausführungsform der Erfindung kann die Heißgetränkezubereitungsvorrichtung eine außenseitige Stirnverzahnung an einem inneren, z.B. dem ersten Kupplungselement, und eine innenseitige Stirnverzahnung am äußeren, beispielhaft dem zweiten Kupplungselement, aufweisen. Die Stirnverzahnung erfordert vorliegend dafür nicht zwingend herkömmlich ausgebildete Zähne z.B. in Evolventenform. Sie kann vielmehr grundsätzlich eine Anzahl von ersten Kraftübertragungselementen an dem ersten Kupplungselement und eine der Anzahl von ersten Kraftübertragungselementen entsprechenden Anzahl von zweiten Kraftübertragungselementen an dem zweiten Kupplungselement umfassen, wobei im Betrieb die ersten Kraftübertragungselemente und die zweiten Kraftübertragungselemente wie zum Beispiel bei einer triebstockartigen Verzahnung ineinandergreifen. Zur Ausbildung eines Eingriffsspiels kann zum Beispiel der Außenradius des inneren Kupplungselements etwas kleiner sein als der Innenradius des äußeren Kupplungselements. Der Größenunterschied kann dabei derart gewählt sein, dass sich zum Beispiel das innere Kupplungselement in dem äußeren Kupplungselement radial bewegen kann, ohne das äußere Kupplungselement an dessen Innenumfang zwischen dessen Kraftübertragungselementen zu berühren. Die Kupplungselemente können folglich auch dann ineinander greifen, wenn deren Hauptachsen versetzt zueinander liegen. Das erste und das zweite Kupplungselement müssen also nicht bereits koaxial liegen bzw. zentriert sein, wenn sie ineinander greifen.

Beispielsweise kann das innere Kupplungselement als eine Art Keilwelle und seine Kraftübertragungselemente können als Keile bzw. Fortsätze der Keilwelle ausgebildet sein. Entsprechend kann das äußere Kupplungselement quasi eine innenverzahnte Abtriebswelle darstellen. Deren Kraftübertragungselemente können ebenfalls als Fortsätze oder Keile ausgebildet sein, zwischen denen sich entsprechende Keilnuten bzw. Ausnehmungen befinden, in welche die Keile des inneren Kupplungselements eingreifen können. Dazu entsprechen sich die Anzahlen der Keile des inneren Kupplungselements und der Keilnuten des äußeren Kupplungselements. Insbesondere drei oder mehr Keile bzw. Keilnuten ermöglichen eine zuverlässige Koppelung der Kupplungselemente.

Ein Eingriffsspiel lässt sich in dieser Ausführungsform dadurch ausbilden, dass die Keile kleiner, z. B. kürzer und/oder schmaler sind als die Öffnungsweite der Keilnuten. Das innere Kupplungselement kann sich also auch dann, wenn es sich unzentriert innerhalb des äußeren Kupplungselements befindet, um einen gewissen, vorgegebenen Winkel verdrehen, ohne jenes mitzubewegen.

In einer vorteilhaften Ausführungsform der Erfindung kann ein Fußkreisdurchmesser, also der Außendurchmesser des inneren Kupplungselements, z. B. 10% bis 30% kleiner sein als ein Kopfkreisdurchmesser, also der Innendurchmesser des äußeren Kupplungselements einschließlich seiner Kraftübertragungselemente. Zugleich kann der Kopfkreisdurchmesser des inneren Kupplungselements entsprechend kleiner als der Fußkreisdurchmesser des äußeren Kupplungselements sein. Die jeweiligen Differenzen zwischen den Fußkreisdurchmessern und den Kopfkreisdurchmessern führen zu einem radialen Spiel zwischen den Kupplungselementen und definieren deren maximalen Achsversatz. Unterscheiden sich die Fußkreisdurchmesser z. B. um einen halben Zentimeter von den Kopfkreisdurchmessern, kann ein Abstand der Hauptachsen der zwei Kupplungselemente von bis zu einem halben Zentimeter ausgeglichen werden. Unter "Ausgleichen" ist dabei zu verstehen, dass das innere Kupplungselement trotz des Achsversatzes in das äußere Kupplungselement eingreifen kann. Im Eingriff kann sich folglich keines der Kupplungselemente um mehr als einen vorgegebenen Winkel drehen, ohne das andere Kupplungselement mitzudrehen.

Für die vorliegende Erfindung ist es nicht notwendig, dass die Kraftübertragungselemente der beiden Kupplungselemente in einem Querschnitt orthogonal zur Hauptachse des jeweiligen Kupplungselements die gleiche Kontur aufweisen. Vielmehr können die Konturen der Kraftübertagungselemente unterschiedlich gewählt sein. Auch dadurch kann der Achsversatz der Hauptachsen der zwei Kupplungselemente maximiert werden, der durch die vorliegende Erfindung ausgeglichen werden kann. In einer weiteren vorteilhaften Ausführungsform können die Kraftübertragungselemente des inneren Kupplungselements in Betriebsdrehrichtung, also derjenigen Richtung, in welche sich das innere Kupplungselement im Betrieb dreht, radial geneigte Anlageflanken aufweisen. Ferner können die Kraftübertragungselemente des äußeren Kupplungselements radial verlaufende Anlageflanken entgegen der Betriebsdrehrichtung des ersten Kupplungselements aufweisen. Beispielsweise können die Kraftübertragungselemente des inneren Kupplungselements bzw. die Keile die Kontur eines spitzwinkligen Dreiecks oder eines entsprechenden Trapezes aufweisen. Die Ausnehmungen zwischen den Kraftübertragungselementen des äußeren Kupplungselements bzw. die Keilnuten können parallele Flanken aufweisen und durch den kreisbogenförmigen äußeren Rand des äußeren Kupplungselements begrenzt sein. Vier Keilnuten des äußeren Kupplungselements können z. B. zwischen vier rechtwinkligen gleichschenkligen Dreiecken ausgebildet sein. Während die Innenflanken der Ausnehmungen also paarweise parallel zueinander liegen, stehen die Flanken der Kraftübertragungselemente des inneren Kupplungselements in einem Winkel zueinander. Eine geeignete Dimensionierung der Kraftübertragungselemente führt zu ihrer flächigen statt einer linearen Anlage, womit die Materialbelastung der Kraftübertragungselemente reduziert werden kann. Sie ermöglicht darüber hinaus bei einer Drehung eine Selbstzentrierung der Hauptachsen des ersten Kupplungselements und des zweiten Kupplungselements. Liegen sie zueinander versetzt, berührt bei einer Drehung des inneren Kupplungselements einer seiner Keile als erstes eine Innenflanke einer Keilnut an dem äußeren Kupplungselement. Bei einer weiteren Drehung des inneren Kupplungselements zieht der erste bereits anliegende Keil das äußere Kupplungselement mit sich. So gelangen nacheinander alle Keile mit ihren entsprechenden Keilnuten in Kontakt. Befinden sich mindestens drei Keile in Kontakt mit ihren jeweiligen Keilnuten, sind die Hauptachsen des inneren und des äußeren Kupplungselements zentriert.

### Eingriffsspiel

Üblicherweise werden Brüheinheiten seitlich aus der jeweiligen Heißgetränkezubereitungsvorrichtung entnommen. Verläuft die Antriebsachse der Brüheinheit parallel zu ihrer Entnahmerichtung, lassen sich die Kupplungselemente beim Entnehmen der Brüheinheit weitgehend problemlos trennen. Verläuft die Antriebsachse aber vertikal wie oft z.B. bei sog. Spindelbrüheinheiten, steht die Antriebsachse folglich senkrecht zur Entnahmerichtung. Befinden sich die Kupplungselemente im Eingriff, können sie folglich die Entnahme der Brüheinheit blockieren. In einer vorteilhaften Ausführungsform kann für einen solchen Fall das erste oder das zweite Kupplungselement in Richtung seiner Haupt- bzw. Drehachse, also axial zwischen einer Eingriffsposition und einer Ausrückposition verschiebbar sein. In der Eingriffsposition sind die Kupplungselemente formschlüssig gekoppelt, in der Ausrückposition dagegen entkoppelt. Ferner kann eine Hebevorrichtung vorgesehen sein, welche dazu ausgebildet ist, eines der Kupplungselemente zwischen der Eingriffsposition und der Ausrückposition zu bewegen. Das verschiebbare Kupplungselement kann vorzugsweise nicht in der Brüheinheit angeordnet sein und in einem Linearlager gelagert werden. Durch die Hebevorrichtung kann die Verbindung des verschiebbaren Kupplungselements mit dem anderen Kupplungselement in axialer Richtung hergestellt und/oder gelöst werden. Erfindungsgemäß kann damit die Brüheinheit auch orthogonal zur Koppelungsrichtung aus der Heißgetränkezubereitungsvorrichtung entnommen und eingesetzt werden. Die Hebevorrichtung kann ein Benutzer vorzugsweise manuell mit Hilfe eines Hebels betätigten oder maschinell angetrieben sein.

Beim Einsetzen der Brüheinheit in die Heißgetränkezubereitungsvorrichtung können sich die Kraftübertragungselemente der Kupplungselemente an einer beliebigen Position zueinander befinden. Beim Absenken des verschiebbaren Kupplungselements können seine Kraftübertragungselemente auf denjenigen des anderen Kupplungselements aufliegen und ein Koppeln der Kupplung verhindern. In einer weiteren vorteilhaften Ausführungsform kann die Heißgetränkezubereitungsvorrichtung daher eine Feder aufweisen, welche das verschiebbare Kupplungselement in der Richtung seiner Rotationsachse und in Richtung der Eingriffsposition vorspannt. Die Kraftübertragungselemente des zweiten Kupplungselements drücken das erste Kupplungselement dann auf dem Führungsstift entgegen der Vorspannkraft der Feder in Richtung der Eingriffsposition. Die Brüheinheit kann folglich eingesetzt werden bzw. das verschiebbare Kupplungselement aus der Ausrückposition in die Eingriffsposition abgesenkt werden, ohne dass sich die Kupplungselemente zwingend im Eingriff befinden. Das verschiebbare Kupplungselement liegt dann in einer Position zwischen der aus der Ausrückposition und der Eingriffsposition auf dem anderen Kupplungselement auf. Bei einer Drehung der Kupplungselemente verschieben sich deren Kraftübertragungselemente gegeneinander, sodass das verschiebbare. Kupplungselement unter der Federkraft der Feder in seine Eingriffsposition schnappt.

Beim Einsetzen der Brüheinheit in die Heißgetränkezubereitungsvorrichtung können je nach Lage des ersten Kupplungselements und des zweiten Kupplungselements die einzelnen Kraftübertragungselemente des ersten und des zweiten Kupplungselements aufeinanderliegen und ein Einsetzen der Brüheinheit in die Heißgetränkezubereitungsvorrichtung verhindern. Um auch bei einer solchen Lage der Kraftübertragungselemente ein Einsetzen der Brüheinheit zu ermöglichen, können in einer vorteilhaften Ausführungsform die einzelnen Kraftübertragungselemente in Achsrichtung abgeschrägt ausgebildet sein. Liegen nun zwei der Kraftübertragungselemente beim Einsetzen der Brüheinheit einander gegenüber, kommen deren abgeschrägte Stirnseiten miteinander in Kontakt und gleiten aneinander entlang, sodass die Kupplungselemente ggf. unter leichter Verdrehung gegeneinander in Eingriff kommen. Das erste und das zweite Kupplungselement bilden folglich eine selbstfindende Kupplung, die einen Eingriff zwischen dem ersten und dem zweiten Kupplungselement auch dann ermöglicht, wenn Kraftübertragungselemente des ersten und des zweiten Kupplungselements direkt einander gegenüber liegen.

In einer vorteilhaften Ausführungsform der Erfindung kann die Heißgetränkezubereitungsvorrichtung eine Art Klauenkupplung als erstes und zweites Kupplungselement aufweisen, insbesondere eine Planverzahnung bzw. Hirth-Verzahnung. Die radial angeordneten, in der Regel konischen und im Eingriff der Kupplung statisch und flächig aneinander anliegenden Zähne bewirken eine Zentrierung der Kupplungselemente, so dass auch diese Kupplung von sich aus selbstzentrierend wirkt. Ein Eingriffsspiel lässt sich durch die Dimensionierung der Verzahnung der Kupplungselemente herstellen.

In einer weiteren vorteilhaften Ausführungsform der Erfindung kann die Heißgetränkezubereitungsvorrichtung eine kegelförmige Außenverzahnung an dem einen Kupplungselement und eine kegelförmige Innenverzahnung am anderen Kupplungselement aufweisen. Die Kegelform der Kupplungselemente ermöglicht eine selbstzentrierende Kupplung, bei der das eine Kupplungselement durch das andere Kupplungselement in Position gezogen wird, wenn das verfahrbare Kupplungselement von einer Ausrückposition in eine Eingriffsposition verfährt. Durch die Zahnform der Außen- und/oder der Innenverzahnung ist die Kupplung von sich aus bereits selbstfindend gestaltet. Sobald sich die Kegelspitze des außenverzahnten Kupplungselements innerhalb der Grundfläche des innenverzahnten Kupplungselements befindet, lassen sich daher die Kupplungselemente in einen sich selbst korrigierenden Eingriff miteinander bringen. Ein Eingriffsspiel lässt sich durch die Dimensionierung der Außen- und der Innenverzahnung erreichen.

Das Prinzip der Erfindung wird im Folgenden unter Hinweis auf die beigefügten Figuren beispielshalber noch näher erläutert. Dabei sind in den verschiedenen Figuren gleiche Komponenten mit identischen Bezugsziffern versehen. Es zeigen:
- Figur 1:: eine schematische Darstellung einer Ausführungsform der erfindungsgemäßen Heißgetränkezubereitungsvorrichtung;
- Figur 2:: eine weitere schematische Darstellung der Ausführungsform der erfindungsgemäßen Heißgetränkezubereitungsvorrichtung der Figur 1;
- Figur 3:: eine weitere schematische Darstellung der Ausführungsform der erfindungsgemäßen Heißgetränkezubereitungsvorrichtung der Figur 1;
- Figur 4:: eine weitere schematische Darstellung der Ausführungsform der erfindungsgemäßen Heißgetränkezubereitungsvorrichtung der Figur 1;
- Figur 5:: eine weitere schematische Darstellung der Ausführungsform der erfindungsgemäßen Heißgetränkezubereitungsvorrichtung der Figur 1;
- Figur 6:: eine Schnittansicht der Kupplungselemente der erfindungsgemäßen Heißgetränkezubereitungsvorrichtung der Figur 1;
- Figur 7:: eine weitere Schnittansicht der Kupplungselemente der erfindungsgemäßen Heißgetränkezubereitungsvorrichtung der Figur 1;
- Figur 8:: eine weitere Schnittansicht der Kupplungselemente der erfindungsgemäßen Heißgetränkezubereitungsvorrichtung der Figur 1; und
- Figur 9:: eine weitere Schnittansicht der Kupplungselemente der erfindungsgemäßen Heißgetränkezubereitungsvorrichtung der Figur 1.

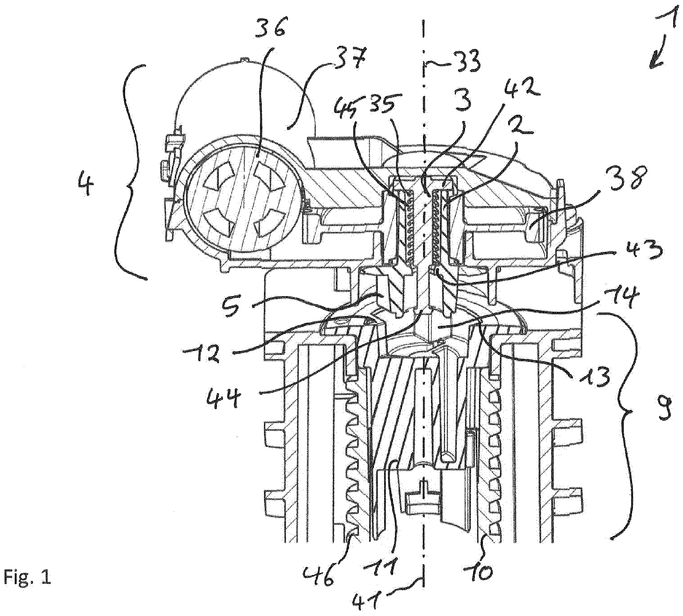

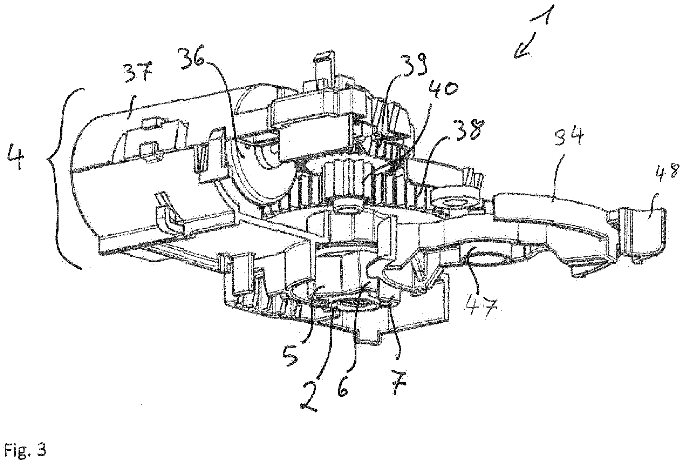

Die lediglich ausschnittsweise in einer Schnittansicht dargestellte Heißgetränkezubereitungsvorrichtung 1 der Figur 1 weist eine Antriebseinheit 4 auf, die einen Motor 36 mit einer Abdeckung 37 aufweist, der über Zahnräder 38, 39 und 40 (in Figur 1 ist lediglich das Zahnrad 38 sichtbar, siehe Figur 3) mit einem ersten Kupplungselement 2 gekoppelt ist. Die Zahnräder 38, 39, 40 bilden folglich ein Getriebe, welches gemeinsam mit dem Motor 36 von der Abdeckung 37 umgeben ist.

Das erste Kupplungselement 2 sitzt axial verschiebbar gelagert im Zahnrad 38. Das erste Kupplungselement 2 kann folglich in Richtung der Hauptachse 33 verschoben werden und ist rotatorisch starr mit dem Zahnrad 28 gekoppelt, dreht sich also mit diesem mit. Dabei ist das erste Kupplungselement 2 als Hohlwelle ausgebildet, in die ein Führungsstift 3 ragt. Der Außendurchmesser des Führungsstifts 3 ist dabei kleiner als der Innendurchmesser des ersten Kupplungselements 2, sodass zwischen diesen ein Hohlraum 45 besteht.

In dem Hohlraum 45 ist eine Feder 35 angeordnet, die sich zwischen einem oberen Kopf 42 des Führungsstifts 3 und einem Gegenlager 43 des ersten Kupplungselements 2 abstützt. Die Feder 35 spannt das erste Kupplungselement 2 abwärts, d.h. von dem oberen Kopf 42 weg, in eine Eingriffsposition vor. In Figur 1 ist die Feder 35 maximal komprimiert. Das erste Kupplungselement 2 befindet sich also an seinem höchsten Punkt und damit in einer Ausrückposition.

Das untere freie Ende des ersten Kupplungselements 2 weist an seinen Umfang radial abstehende Kraftübertragungselemente 5, 6, 7, 8 auf, von denen lediglich das Kraftübertragungselement 5 sichtbar ist.

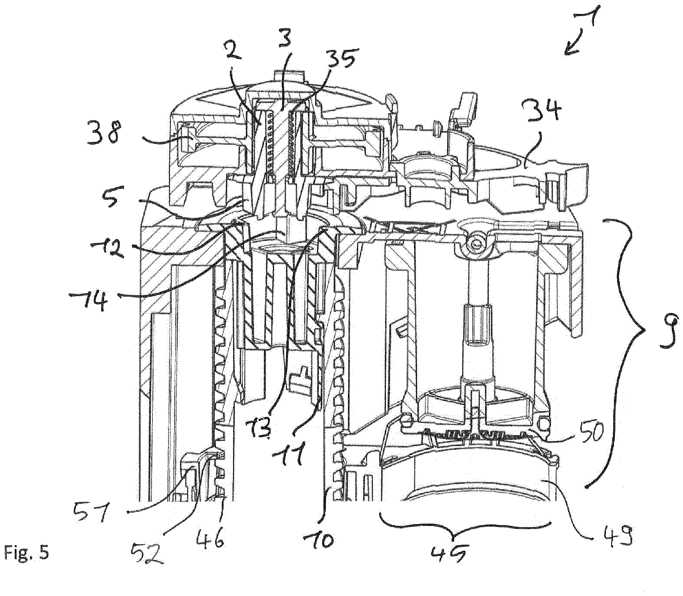

Unterhalb des ersten Kupplungselements 2 und der Antriebseinheit 4 ist eine Spindelbrüheinheit 9 dargestellt. Sie weist eine Achse 10 bzw. Spindel auf, welche im Betrieb der Heißgetränkezubereitungsvorrichtung 1 rotiert, um einen Brühzylinder 45 (siehe Figur 5) vertikal zu verfahren. Dazu besitzt die Achse 10 ein schneckenartiges Außengewinde 46, auf welchem der Brühzylinder 45 mit einer entsprechenden Innenverzahnung sitzt. Um eine Drehung der Antriebseinheit 4 auf die Achse 10 zu übertragen, weist diese an ihrem oberen Ende ein starr mit dieser gekoppeltes oder einteilig mit dieser ausgebildetes zweites Kupplungselement 11 auf. Die Hauptachse 41 der Achse 10 bzw. Spindel und damit des zweiten Kupplungselements 11 liegt auf der Hauptachse 33 des ersten Kupplungselements 2. Die Spindelbrüheinheit befindet sich folglich bereits in ihrer Betriebsposition.

Das zweite Kupplungselement 11 ist als eine Art innenverzahnte Hohlwelle ausgebildet. Die innenverzahnte Hohlwelle 11 weist als Zähne bzw. Keile zweite Kraftübertragungselemente 12, 13, 14, 15 auf, wobei das Kraftübertragungselement 15 nicht sichtbar ist.

Wie oben bereits erläutert, befindet sich das erste Kupplungselement 2 in Figur 1 in seiner höchsten bzw. Ausrückposition. Denn es greift nicht in das zweite Kupplungselement 11 ein, ist also ausgerückt. Die Brüheinheit 9 kann in der Situation der Figur 1 folglich lateral, also orthogonal zur Hauptachse 33 aus der Heißgetränkezubereitungsvorrichtung 1 entnommen werden.

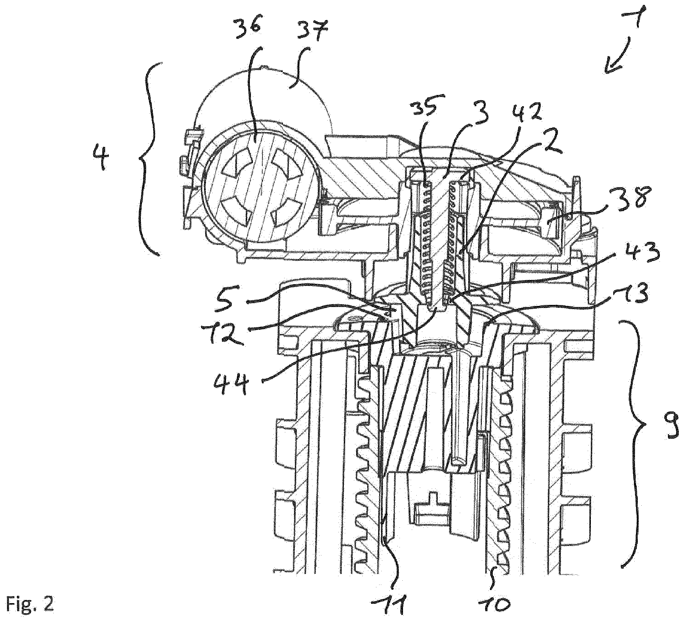

Figur 2 zeigt die gleiche Schnittansicht der Heißgetränkezubereitungsvorrichtung 1, die auch in Figur 1 dargestellt ist. Allerdings befindet sich das erste Kupplungselement 2 nun in seiner tiefsten bzw. seiner Eingriffsposition. Dabei ruht das Gegenlager 43 des ersten Kupplungselements 2 auf einem unteren Kopf 44 des Führungsstifts 3, womit die Feder 35 weitgehend entspannt ist.

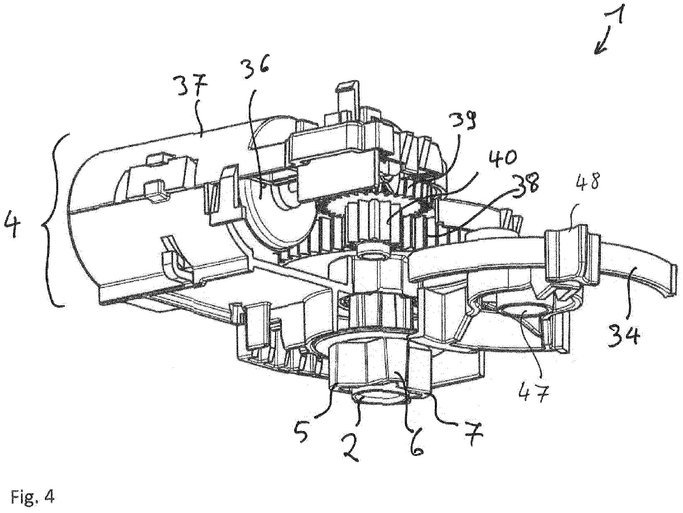

Figuren 3 und 4 zeigen die Antriebseinheit 4 mit dem ersten Kupplungselement 2 und der Hebevorrichtung 34, die dazu dient, das erste Kupplungselement 2 anzuheben oder abzusenken. Die Hebevorrichtung 34 ist als Hebel ausgebildet, der sich entgegen der Uhrzeigerrichtung um eine Hohlwelle 47 rotieren lässt, um das erste Kupplungselement 2 entgegen der Federkraft der Feder 35 von seiner Eingriffsposition (s. Figuren 2 und 4) in eine Ausrückposition (vgl. Figuren 1 und 3) zu überführen. Wenn die Hebevorrichtung 34 in der Gegenrichtung betätigt wird, drückt die Feder 35 das erste Kupplungselement 2 in die Eingriffsposition abwärts. Um einem Benutzer das Betätigen der Hebevorrichtung 34 zu ermöglichen, weist sie einen Griff 48 auf.

Figur 5 ist eine weitere ausschnittsweise Darstellung der Heißgetränkezubereitungsvorrichtung 1. Im Unterschied zu Figuren 1 und 2 fehlt in Figur 5 der Motor 36. Hier ist ferner ein beweglicher Brühzylinder 45 dargestellt, der über eine Hülse 51 mit der beweglichen Achse 10 der Brüheinheit 9 gekoppelt ist. Die Hülse 51 weist ein Innengewinde 52 auf, welches auf dem Außengewinde 46 der Achse 10 läuft. Durch eine Drehung der Achse 10 wird folglich die Hülse 51 und damit der Brühzylinder 45 auf- und abwärts bewegt.

Das erste Kupplungselement 2 befindet sich in seiner Ausrückposition und damit nicht im Eingriff mit der Brüheinheit 9 bzw. dem zweiten Kupplungselement 11. Um einen Brühvorgang durchzuführen, muss das erste Kupplungselement 2 per Hebevorrichtung 34 in die Eingriffsposition bewegt werden. Nur so kann eine Kraftübertragung zwischen dem ersten Kupplungselement 2 und dem zweiten Kupplungselement 11 stattfinden. Befindet sich das erste Kupplungselement 2 im Eingriff mit dem zweiten Kupplungselement 11, wird bei einer Drehung der beweglichen Achse 10 der Brühzylinder 45 nach oben bewegt. Die Zylinderwand 49 schiebt sich dabei über einen starren Brühkolben 50 und bildet mit diesem eine abgeschlossene Brühkammer. Nach dem Ende des Brühvorgangs kann der Brühzylinder 45 wieder abwärts verfahren werden.

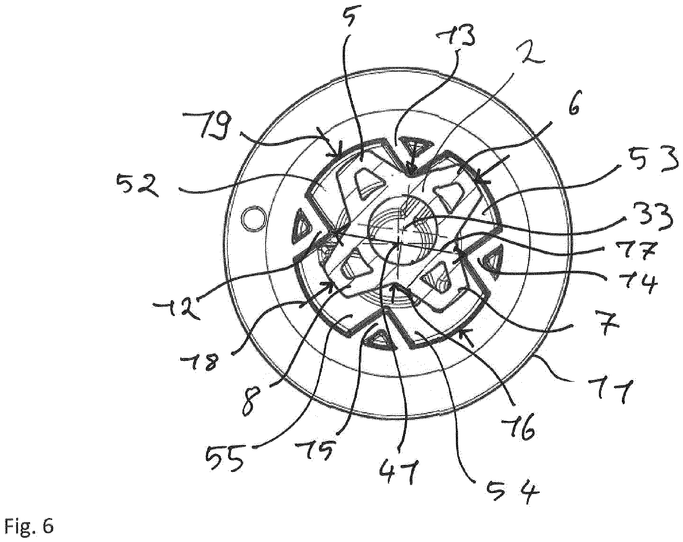

Figuren 6 bis 9 zeigen eine Sequenz des ersten, inneren Kupplungselements 2 und des zweiten, äußeren Kupplungselements 11 in unterschiedlichen Positionen bei einer Drehung des ersten Kupplungselements 2 entgegen dem Uhrzeigersinn. Das erste Kupplungselement 2 und das zweite Kupplungselement 11 sind dabei in einer Schnittansicht orthogonal zur Hauptachse 33 des ersten Kupplungselements 2 bzw. orthogonal zur Hauptachse 41 des zweiten Kupplungselements 11 dargestellt.

Zur Ausbildung eines Eingriffsspiels weisen die ersten und zweiten Kraftübertragungselemente 5 bis 8 und 12 bis 15 unterschiedliche Außenkonturen auf, die bei einem Eingriff der Kupplungselemente 2, 11 nicht zwingend aneinander anliegen. Die ersten Kraftübertragungselemente 5 bis 8 sind jeweils in etwa als gleichschenkliges Trapez ausgebildet. Das hier geschnitten gezeigte untere Ende des ersten Kupplungselements 2 kann folglich auch als außenverzahnte Welle bezeichnet werden.

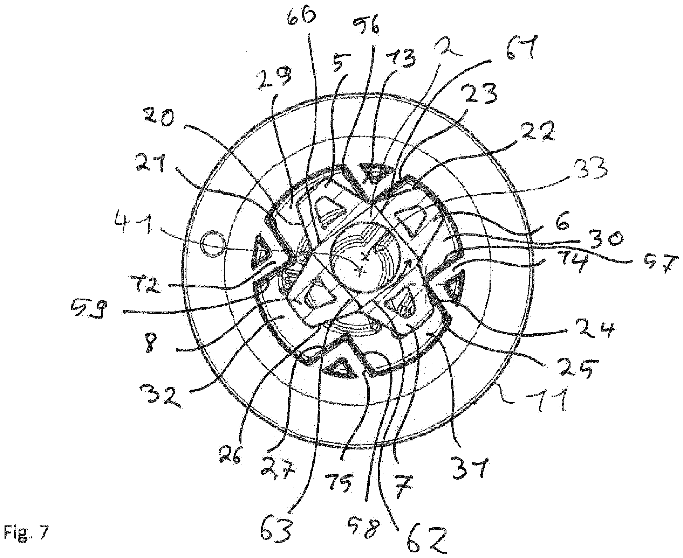

Dagegen sind die zweiten Kraftübertragungselemente 12 bis 15 als gleichschenklige und rechtwinklige Dreiecke ausgebildet, zwischen denen sich Ausnehmungen 52, 53, 54, 55 bilden. Sie weisen paarweise parallele Seitenflächen 21, 23, 25, 27, 56, 57, 58, 59 auf (siehe Figur 7), wobei die aneinander anstoßenden Seitenflächen 21, 59 des Elements 12 bzw. 23, 56 des Elements 13 usw. rechtwinklig aufeinander stehen. Der Abstand zwischen den paarweise parallelen Seitenflächen 21, 59 bzw. 23, 56 usw. ist in etwa 20% größer als die Basisseiten 60, 61, 62, 63 der ersten Kraftübertragungselemente 5 bis 8. Jenen bietet sich also anders als z. B. den Zähnen eines Zahnrads ein sehr großes Spiel in den Ausnehmungen 52, 53, 54, 55.

In Figur 6 sind ferner die unterschiedlichen Durchmesser des ersten Kupplungselements 2 und des zweiten Kupplungselements 11 gekennzeichnet. Der Fußkreisdurchmesser 16 des ersten Kupplungselements 2 ist in etwa 20% kleiner als der Kopfkreisdurchmesser 17 des zweiten Kupplungselements 11. Zugleich ist der Kopfkreisdurchmesser 18 des ersten Kupplungselements 2 kleiner als der Fußkreisdurchmesser 19 des zweiten Kupplungselements 11.

Die hier gezeigte Konfiguration ermöglicht eine radiale und eine Bewegung in Umfangsrichtung des ersten, inneren Kupplungselements 2 in dem zweiten, äußeren Kupplungselement 11 in der Schnittebene der Figur 6. Das erste Kupplungselement 2 kann folglich auch dann in das zweite Kupplungselement 11 eingreifen, wenn es innerhalb eines gewissen Winkels gegenüber dem zweiten Kupplungselement 11 verdreht ist und/oder wenn die Hauptachse 33 des ersten Kupplungselements 2 nicht koaxial mit der Hauptachse 41 des zweiten Kupplungselements 11 verläuft.

Ferner führt diese Konfiguration dazu, dass bei einer Drehung des ersten Kupplungselements 2 das zweite Kupplungselement 11 derart in Position gezogen wird, dass die Hauptachse 41 des zweiten Kupplungselements 11 auf der Hauptachse 33 des ersten Kupplungselements 2 zu liegen kommt. Dieser Vorgang wird in den Figuren 7 bis 9 verdeutlicht. Das erste Kupplungselement 2 führt dabei eine Drehung entgegen dem Uhrzeigersinn aus.

In Figur 7 tritt die Anlageflanke 24 des ersten Kraftübertragungselements 7 in einen zunächst linearen (im Schnitt der Figur 7 punktförmigen) Kontakt mit der Anlageflanke 25 des zweiten Kraftübertragungselements 14. Die weiteren Anlageflanken 20, 21, 22, 23 und 26, 27 berühren sich dagegen noch nicht.

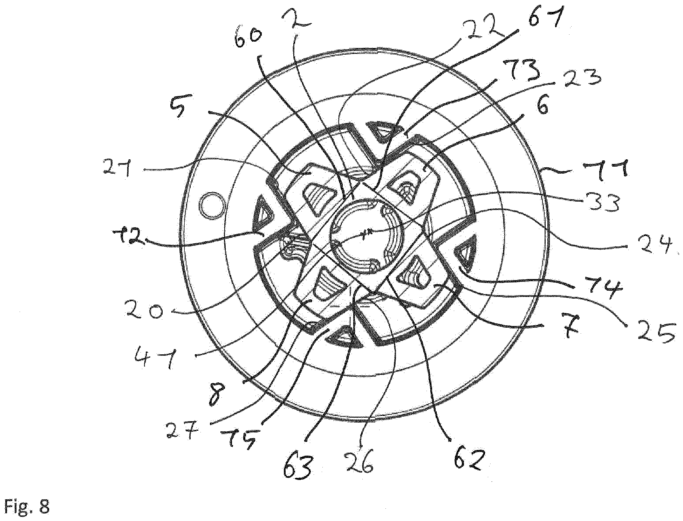

Die weitere Drehung des ersten Kupplungselements 2 lässt die Anlageflanke 24 um die Kontaktlinie abrollen, bis sie fast vollständig flächig an der Anlageflanke 25 anliegt. Zugleich tritt, wie in Figur 8 zu sehen, die Anlageflanke 26 des ersten Kraftübertragungselements 8 in einen ebenfalls zunächst linearen Kontakt mit der Anlageflanke 27 des zweiten Kraftübertragungselements 15. Weil die Anlageflanke 24 des trapezförmigen Kraftübertragungselements 7 gegenüber dem Radius geneigt verläuft, wird die Hauptachse 41 des zweiten Kupplungselements 11 gleichzeitig in Richtung der Hauptachse 33 des ersten Kupplungselements 2 gezogen.

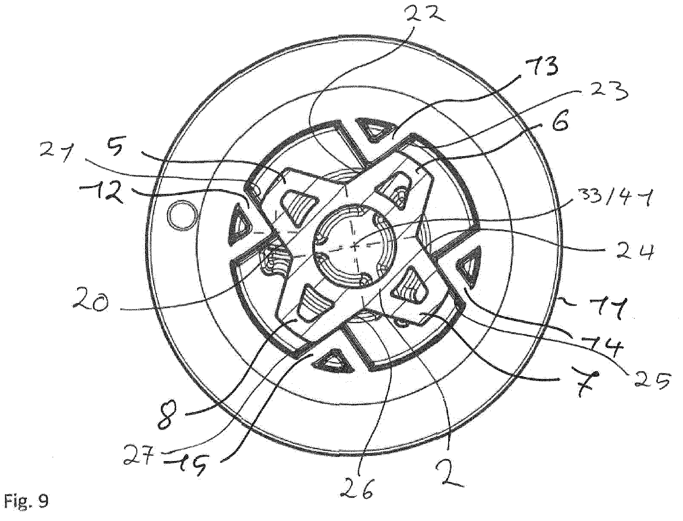

Schließlich zeigt Figur 9 die Lage des ersten Kupplungselements 2 in dem zweiten Kupplungselement 11, in der die Anlageflanken 24, 26 flächig an den Anlageflanken 25, 27 anliegen. Damit kommen auch die letzten Anlageflanken 20, 22 des ersten Kupplungselements an den entsprechenden Anlageflanken 21, 23 des zweiten Kupplungselements 11 flächig zur Anlage. Es besteht folglich ein vollständiger Formschluss zwischen dem ersten Kupplungselement 2 und dem zweiten Kupplungselement 11. Ferner liegt die Hauptachse 41 des zweiten Kupplungselements 11 nun auf der Hauptachse 33 des ersten Kupplungselements 2.

Da es sich bei der vorhergehend detailliert beschriebenen Kupplungsvorrichtung für eine Heißgetränkezubereitungseinrichtung um ein Ausführungsbeispiel handelt, kann sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente der Kupplungsvorrichtung zueinander lediglich beispielhaft. Insbesondere kann nicht nur das erste Kupplungselement in das zweite Kupplungselement eingreifen. Es kann vielmehr auch das zweite Kupplungselement in das erste Kupplungselement eingreifen.

### Bezugszeichenliste

- 1: Heißgetränkezubereitungsvorrichtung
- 2: erstes Kupplungselement
- 3: Führungsstift
- 4: Antriebseinheit
- 5 bis 8: erste Kraftübertragungselemente
- 9: Brüheinheit
- 10: Achse
- 11: zweites Kupplungselement
- 12 bis 15: zweite Kraftübertragungselemente
- 16 bis 19: Durchmesser
- 20 bis 27: Anlageflanken
- 29 bis 32: Ausnehmungen
- 33: Hauptachse
- 34: Hebevorrichtung
- 35: Feder
- 36: Motor
- 37: Abdeckung
- 38 bis 40: Zahnrad
- 41: Hauptachse
- 42: oberer Kopf
- 43: Gegenlager
- 44: unterer Kopf
- 45: Brühzylinder
- 46: Außengewinde
- 47: Welle
- 48: Griff
- 49: Zylinderwand
- 50: Brühkolben
- 51: Hülse
- 52 bis 55: Ausnehmungen
- 56 bis 59: Seitenflächen
- 60 bis 63: Basisseiten

## Patentansprüche

1. Heißgetränkezubereitungsvorrichtung (1), insbesondere Kaffeevollautomat,
- mit einem ersten, mit einer Antriebseinheit (4) gekoppelten Kupplungselement (2),
- mit einer aus der Heißgetränkezubereitungsvorrichtung (1) entnehmbaren Brüheinheit (9), und
- mit einem zweiten, der Brüheinheit zugeordneten Kupplungselement (11),
**dadurch gekennzeichnet, dass** in einem Betrieb der Heißgetränkezubereitungsvorrichtung (1) das erste Kupplungselement (2) und das zweite Kupplungselement (11) mit einem Eingriffsspiel derart ineinander eingreifen, dass die Brüheinheit (9) und damit das ihr zugeordnete Kupplungselement (11) in der Heißgetränkezubereitungsvorrichtung (1) spielbehaftet sitzen.

2. Heißgetränkezubereitungsvorrichtung (1) nach Anspruch 1, **gekennzeichnet durch** eine außenseitige Stirnverzahnung an dem einen Kupplungselement und eine innenseitige Stirnverzahnung an dem anderen Kupplungselement.

3. Heißgetränkezubereitungsvorrichtung (1) nach Anspruch 2, wobei der Fußkreisdurchmesser (16) des inneren Kupplungselements (2) kleiner, insbesondere 10% bis 30% kleiner ist als ein Kopfkreisdurchmesser (17) des äußeren Kupplungselements (11), und wobei der Kopfkreisdurchmesser (18) des inneren Kupplungselements (2) kleiner, insbesondere 10% bis 30% kleiner ist als der Fußkreisdurchmesser (19) des äußeren Kupplungselements (11).

4. Heißgetränkezubereitungsvorrichtung (1) nach einem der vorherigen Ansprüche 2 und 3, wobei die inneren Kraftübertragungselemente (5 bis 8) radial geneigte Anlageflanken (20 bis 23) in Betriebsdrehrichtung des inneren Kupplungselements (2) aufweisen und wobei die äußeren Kraftübertragungselemente (12 bis 15) radial verlaufende Anlageflanken (24 bis 27) entgegen der Betriebsdrehrichtung des inneren Kupplungselements (2) aufweisen.

5. Heißgetränkezubereitungsvorrichtung (1) nach einem der vorherigen Ansprüche 2 bis 4, wobei die ersten Kraftübertragungselemente (5 bis 8) in einem radialen Querschnitt weniger breit, insbesondere 10% bis 30% weniger breit sind als die Ausnehmungen (29 bis 32) zwischen den zweiten Kraftübertragungselementen (12 bis 15) in einem radialen Querschnitt.

6. Heißgetränkezubereitungsvorrichtung (1) nach Anspruch 1, **gekennzeichnet durch** eine Klauenkupplung als erstem Kupplungselement (2) und als zweitem Kupplungselement (11).

7. Heißgetränkezubereitungsvorrichtung (1) nach Anspruch 1, **gekennzeichnet durch** eine Planverzahnung oder eine Hirth-Verzahnung an den Kupplungselementen (2, 11).

8. Heißgetränkezubereitungsvorrichtung (1) nach Anspruch 1, **gekennzeichnet durch** eine kegelförmige Außenverzahnung an dem einen Kupplungselement (2) und durch eine kegelförmige Innenverzahnung an dem anderen Kupplungselement (11).

9. Heißgetränkezubereitungsvorrichtung (1) nach einem der vorherigen Ansprüche, mit einem axial verschiebbaren ersten Kupplungselement (2) und mit einer Hebevorrichtung (34), welche ausgebildet ist, das erste Kupplungselement (2) axial zwischen einer Eingriffsposition und einer Ausrückposition zu verschieben.

10. Heißgetränkezubereitungsvorrichtung (1) nach einem der vorherigen Ansprüche, mit einer Feder (35), welche das erste Kupplungselement (2) in seine Eingriffsposition vorspannt.

## Claims

1. Hot beverage preparation device (1), in particular fully automatic coffee machine,
- having a first coupling element (2) coupled to a drive unit (4),
- having a brewing unit (9) which can be removed from the hot beverage preparation device (1), and
- having a second coupling element associated with the brewing unit (11),
**characterised in that** during operation of the hot beverage preparation device (1) the first coupling element (2) and the second coupling element (11) engage with one another with backlash such that the brewing unit (8) and thus the coupling element (11) associated with it sit with clearance in the hot beverage preparation device (1).

2. Hot beverage preparation device (1) according to claim 1, **characterised by** an external spur gearing on one coupling element and an internal spur gearing on the other coupling element.

3. Hot beverage preparation device (1) according to claim 2, wherein the root diameter (16) of the inner coupling element (2) is smaller, in particular 10% to 30% smaller, than a tip diameter (17) of the outer coupling element (11), and wherein the tip diameter (18) of the inner coupling element (2) is smaller, in particular 10% to 30% smaller, than the root diameter (19) of the outer coupling element (11).

4. Hot beverage preparation device (1) according to one of the preceding claims 2 and 3, wherein the inner force transmission elements (5 to 8) have radially inclined contact flanks (20 to 23) in the operating direction of rotation of the inner coupling element (2) and wherein the outer force transmission elements (12 to 15) have radially running contact flanks (24 to 27) counter to the operating direction of rotation of the inner coupling element (2).

5. Hot beverage preparation device (1) according to one of the preceding claims 2 to 4, wherein the first force transmission elements (5 to 8) are less wide in a radial cross-section, in particular 10% to 30% less wide, than the recesses (29 to 32) between the second force transmission elements (12 to 15) in a radial cross-section.

6. Hot beverage preparation device (1) according to claim 1, **characterised by** a jaw clutch as the first coupling element (2) and as the second coupling element (11).

7. Hot beverage preparation device (1) according to claim 1, **characterised by** a face gearing or a Hirth gearing on the coupling elements (2, 11).

8. Hot beverage preparation device (1) according to claim 1, **characterised by** a conical external gearing on one coupling element (2) and by a conical internal gearing on the other coupling element (11).

9. Hot beverage preparation device (1) according to one of the preceding claims, having an axially displaceable first coupling element (2) and having a lifting device (34) which is embodied to axially displace the first coupling element (2) between an engagement position and a disengagement position.

10. Hot beverage preparation device (1) according to one of the preceding claims, having a spring (35) which biases the first coupling element (2) into its engagement position.

## Revendications

1. Dispositif de préparation de boissons chaudes (1), notamment machine à café entièrement automatique,
- comprenant un premier élément de couplage (2) couplé à une unité d'entraînement (4),
- comprenant une unité de percolation (9) amovible du dispositif de préparation de boissons chaudes (1), et
- comprenant un deuxième élément de couplage (11) associé à l'unité de percolation,
**caractérisé en ce que** pendant un fonctionnement du dispositif de préparation de boissons chaudes (1), le premier élément de couplage (2) et le deuxième élément de couplage (11) ont prise l'un dans l'autre au moyen d'un jeu de prise de manière à ce que l'unité de percolation (9) et ainsi l'élément de couplage (11) qui lui est associé soient positionnés avec jeu dans le dispositif de préparation de boissons chaudes (1).

2. Dispositif de préparation de boissons chaudes (1) selon la revendication 1, **caractérisé par** une denture frontale extérieure sur l'un élément de couplage et par une denture frontale intérieure sur l'autre élément de couplage.

3. Dispositif de préparation de boissons chaudes (1) selon la revendication 2, le diamètre de pied (16) de l'élément de couplage intérieur (2) étant plus petit, notamment 10% à 30% plus petit qu'un diamètre de tête (17) de l'élément de couplage extérieur (11), et le diamètre de tête (18) de l'élément de couplage intérieur (2) étant plus petit, notamment 10% à 30% plus petit que le diamètre de pied (19) de l'élément de couplage extérieur (11).

4. Dispositif de préparation de boissons chaudes (1) selon l'une quelconque des revendications précédentes 2 et 3, les éléments intérieurs de transmission de force (5 à 8) présentant des flancs d'application (20 à 23) radialement inclinés en direction de rotation de fonctionnement de l'élément de couplage intérieur (2), et les éléments extérieurs de transmission de force (12 à 15) présentant des flancs d'application (24 à 27) s'étendant radialement en direction de rotation de fonctionnement inverse de l'élément de couplage intérieur (2).

5. Dispositif de préparation de boissons chaudes (1) selon l'une quelconque des revendications précédentes 2 à 4, les premiers éléments intérieurs de transmission de force (5 à 8), dans une section radiale, étant moins larges, notamment 10% à 30% moins larges que les évidements (29 à 32) entre les deuxièmes éléments de transmission de force (12 à 15) dans une section radiale.

6. Dispositif de préparation de boissons chaudes (1) selon la revendication 1, **caractérisé par** un accouplement à griffes en tant que premier élément de couplage (2) et en tant que deuxième élément de couplage (11).

7. Dispositif de préparation de boissons chaudes (1) selon la revendication 1, **caractérisé par** une denture plane ou une denture Hirth sur les éléments de couplage (2, 11).

8. Dispositif de préparation de boissons chaudes (1) selon la revendication 1, **caractérisé par** une denture extérieure conique sur l'un élément de couplage (2) et par une denture intérieure conique sur l'autre élément de couplage (11).

9. Dispositif de préparation de boissons chaudes (1) selon l'une quelconque des revendications précédentes, comprenant un premier élément de couplage (2) axialement coulissant et un dispositif de levage (34) qui est réalisé pour déplacer le premier élément de couplage (2) axialement entre une position de prise et une position de désengagement.

10. Dispositif de préparation de boissons chaudes (1) selon l'une quelconque des revendications précédentes, comprenant un ressort (35) qui précontraint le premier élément de couplage (2) dans sa position de prise.
